# EUROPÄISCHE PATENTSCHRIFT

(11) **EP 3 702 169 B1**
(45) Veröffentlichungstag und Bekanntmachung des Hinweises auf die Patenterteilung: **03.11.2021**
(21) Anmeldenummer: 20165297.1
(22) Anmeldetag: 12.03.2018
(51) Int. Cl.: B42C 9/00, B42D 3/00, B65H 35/00, B42D 25/36, B42D 25/455, B42D 25/46, B42D 25/47, B42D 25/24, C09J 7/10

(54) **VERFAHREN ZUR HERSTELLUNG EINES HALBZEUGES**
SEMI-FINISHED PRODUCT AND METHOD FOR PRODUCING A SEMI-FINISHED PRODUCT
PROCÉDÉ DE FABRICATION D'UN DEMI-PRODUIT AINSI QUE DEMI-PRODUIT

(30) Priorität: 17.03.2017 DE 102017105799
(43) Veröffentlichungstag der Anmeldung: 02.09.2020
(62) Teilanmeldung aus: 18161257.3
(73) Patentinhaber: Bundesdruckerei GmbH, 10969 Berlin (DE)
(72) Erfinder: Seijo Bollin, Hans-Peter, 10245 Berlin (DE); Wazlawek, Jonathan, 10315 Berlin (DE); Jeworrek, Volker, 12169 Berlin (DE); Zedler, Uwe, 19243 Berlin (DE); Puschkar, Arne, 12167 Berlin (DE); Behrens, Lars, 13187 Berlin (DE)
(74) Vertreter: Mammel und Maser

(56) Entgegenhaltungen:
- DE-A1- 1 536 488

## Beschreibung

Die Erfindung betrifft ein Verfahren zur Herstellung eines Halbzeuges sowie ein Halbzeug, insbesondere für eine buchartiges Sicherheits- und/oder Wertdokument.

Buchartige Sicherheits- und/oder Wertdokumente, wie beispielsweise ein Reisepass, umfassen einen Bucheinband mit einer Buchdeckenvorderseite und einer Buchdeckenrückseite. Diese Buchdeckenvorderseite und die Buchdeckenrückseite umfassen wenigstens eine Buchdeckeneinlage, die an deren Außenseite beispielsweise einen Buchdeckeneinband aufweist. Der Bucheinband nimmt mehrere Datenseiten auf. Eine der Datenseiten kann auch als Personalisierdatenseite ausgebildet sein. Zur Herstellung eines solchen Wertdokumentes wird eine Buchdecke zur Bildung der Buchdeckenvorderseite und der Buchdeckenrückseite als Halbzeug bereitgestellt. Auf dieses Halbzeug wird ein fließfähiger Klebstoff aufgetragen, um beispielsweise einen Bucheinband oder einen Vorsatz durch eine klebende Verbindung mit der Buchdecke zu befestigen.

Zur Herstellung des Halbzeuges ist bislang der Klebstoff vollflächig auf die Oberfläche des kartenförmigen Rohlings aufgesprüht oder mittels Walze aufgetragen worden. Ein solcher vollflächiger Auftrag weist den Nachteil auf, dass bei nachfolgenden Bearbeitungsschritten durch Einwirkung von Druck und/oder Temperatur, um beispielsweise den Bucheinband an der Buchdecke zu fixieren, die Klebstoffschicht seitlich ausgedrückt wird. Dies führt zum Verkleben oder Verschmieren von weiteren Anlagenteilen.

Aus der DE 15 36 488 A1 geht der Oberbegriff des Anspruchs 1 oder ein Verfahren zur Herstellung eines buchartigen Dokumentes hervor, bei welchem ein Bucheinband bereitgestellt wird. Auf den Buchrücken des Bucheinbandes wird eine Klebstoffschicht aufgebracht, deren Abmessung kürzer als die Länge des Buchrückens ist. Darauffolgend wird ein Buchblock mit der Klebeschicht verbunden, um das buchartige Wertdokument herzustellen.

Aus der DE 38 32 662 A1 ist ein trocken übertragbarer, druckempfindlicher Klebstofffilm bekannt, der in Blockform mittels eines Siebdrucks jeweils auf eine Vielzahl übereinander gestapelter Träger aufgebracht ist, um mit der anderen Seite des in der Blockform benachbarten Trägers verklebt zu werden. Diese mittels Siebdruck aufgebrachten Klebstofffilme sind vollflächig auf den Träger aufgetragen.

Aus der DE 103 29 275 A1 ist ein Verbund aus einer übertragbaren Klebeschicht und einer Trägerfolie bekannt, die nicht dauerhaft miteinander verbunden sind. Diese Klebemittelschicht kann mittels eines Auftragskopfes ein von der hundertprozentigen Flächenbelegung abweichendes Schmelzkleberauftragsbild erzeugen. Hierzu werden Fäden aus geschmolzenem Kleber in paralleler Ausrichtung zu einem regelmäßigen bzw unregelmäßigen Netzwerk aus Schmelzklebefäden auf die Trägerfolie aufgetragen.

Der Erfindung liegt die Aufgabe zugrunde, ein Verfahren zur Herstellung eines Halbzeuges vorzuschlagen, bei welchem ein seitliches Austreten der auf dem Halbzeug aufgebrachten Klebstoffschicht bei nachfolgenden Bearbeitungsschritten verhindert wird.

Diese Aufgabe wird durch ein Verfahren zur Herstellung eines Halbzeuges gelöst, bei dem die Klebstoffschicht als eine Materialbahn bereitgestellt wird, deren Breite kleiner als eine erste Abmessung des kartenförmigen Rohlings ist, der quer zur Transportrichtung durch eine Appliziervorrichtung hindurchgeführt wird und die als Klebstoffschicht ausgebildete Materialbahn in ein Appliziersegment geschnitten wird, dessen Länge kürzer als eine zweite Abmessung des kartenförmigen Rohlings längs zur Transportrichtung ist und das Appliziersegment und der kartenförmige Rohling zusammengeführt werden, so dass das Appliziersegment gegenüber allen Außenkanten des kartenförmigen Rohlings zurückversetzt ist. Durch ein solches Verfahren wird ermöglicht, dass ein Appliziersegment aus einer Klebstoffschicht auf den kartenförmigen Rohling aufgebracht wird, welches auf das Format des kartenförmigen Rohlings dahingehend angepasst ist, dass jede Seitenkante des Appliziersegmentes innerhalb der Außenkanten des kartenförmigen Rohlings bzw. gegenüber den Außenkanten des kartenförmigen Rohlings nach innen zurückversetzt ist. Bei nachfolgenden Bearbeitungsschritten dieses Halbzeuges, bei denen u. a. mit Druck und/oder Temperatur auf das Appliziersegment und den kartenförmigen Rohling eingewirkt wird, wird selbst bei einem seitlichen Fließen der Klebstoffschicht des Appliziersegmentes der Fließprozess vor Erreichen der Außenkanten des kartenförmigen Rohlings beendet. Durch ein solches Verfahren kann nicht nur ein Verkleben oder Verschmieren von weiteren Anlagenteilen, insbesondere in einer Appliziervorrichtung zum Aufbringen einer Schicht oder eines Einbandmaterials oder in einer weiteren Vorrichtung zur Aufbringung eines Einbandes auf die Buchdecke, verhindert werden, sondern es kann auch ein kostengünstiges und kontinuierliches Verfahren bereitgestellt werden, durch welches die als Materialbahn bereitgestellte Klebstoffschicht in Form eines Appliziersegmentes auf die Abmessung des kartenförmigen Rohlings angepasst und in einer definierten Weise aufgebracht werden kann.

Gemäß dem Verfahren ist vorgesehen, dass die Klebstoffschicht in einer Schneidstation mit einem Laserstrahl verdampft und in Appliziersegmente getrennt wird. Dabei ist der Laserstrahl bezüglich seiner Energie derart eingestellt, dass ein Verdampfen der Klebstoffschicht bewirkt wird, jedoch ein Durchtrennen der Trägerfolie verhindert ist. Dadurch kann eine kontinuierliche Hindurchführung der Trägerfolie durch sämtliche Bearbeitungsstationen erfolgen, wodurch eine hohe Maßhaltigkeit bei der Herstellung des Halbzeugs gegeben ist.

Eine weitere bevorzugte Ausführungsform des Verfahrens sieht vor, dass in der Applikationsvorrichtung die Klebstoffschicht des Applikationssegmentes angewärmt wird. Dadurch wird ein Anhaften des kartenförmigen Rohlings verbessert.

In der Applikationsvorrichtung wird bevorzugt auf das angewärmte Applikationssegment der kartenförmige Rohling aufgebracht und vorzugsweise mittels Andrückrollen angedrückt. Dadurch kann ein sicheres Anhaften des Applikationssegmentes auf einer Seite des kartenförmigen Rohlings ermöglicht sein.

Des Weiteren ist bevorzugt vorgesehen, dass nach dem Aufbringen des Appliziersegmentes auf den kartenförmigen Rohling oder umgekehrt das daraus gebildete Halbzeug einer Kühlzone zugeführt wird. Dies ermöglicht, dass die Klebewirkung der Klebemittelschicht reduziert wird, so dass ein vereinfachtes Ablösen von dem Transferband gegeben ist.

Nach dem Durchlaufen der Applikationsvorrichtung wird das hergestellte Halbzeug von dem Transferband abgehoben oder abgenommen und einer weiteren Arbeitsstation zugeführt.

Des Weiteren ist bevorzugt vorgesehen, dass die auf den kartenförmigen Rohling aufgebrachte Klebstoffschicht vollflächig aufgebracht wird. Dadurch kann eine verbesserte Aufnahme einer weiteren Schicht erfolgen.

Die Klebstoffschicht ist bevorzugt aus einem Acrylat, Polyolefin, Vinylacetat oder Vinylacetat-Copolymer oder einem thermoplastischen oder latent reaktiven Polyurethan ausgebildet. Diese Klebstoffschicht weist insbesondere den Vorteil auf, dass diese bei Raumtemperatur eine nicht anhaftende Oberfläche aufweist, so dass dieses Halbzeug für die Weiterverarbeitung auch stapelbar ist.

Eine weitere bevorzugte Ausgestaltung sieht vor, dass die Klebstoffschicht zumindest fluoreszierende Bestandteile aufweist. Dies ermöglicht in einfacher Weise eine Prüfung, ob die Klebstoffschicht, welche als Appliziersegment auf den kartenförmigen Rohling aufgebracht ist, innerhalb zulässiger Toleranzen auf dem kartenförmigen Rohling, insbesondere passergenau, positioniert ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht eines buchartigen Dokumentes mit einem Datenträger,
Figur 2 eine perspektivische Ansicht eines Halbzeuges für ein buchartiges Dokument gemäß Figur 1,
Figur 3 eine schematische Ansicht von mehreren aufeinanderfolgenden nicht zur Erfindung gehörenden Verfahrensschritten zur Herstellung des Halbzeuges gemäß Figur 2,
Figur 4 eine schematische Ansicht von mehreren aufeinander folgenden Verfahrensschritten gemäß einer alternativen Ausführungsform zu Figur 3 zur Herstellung des Halbwerkzeugs gemäß Figur 2, und
Figur 5 eine schematische Ansicht von mehreren aufeinanderfolgenden nicht zur Erfindung gehörenden Verfahrensschritten gemäß einer alternativen Ausführungsform zu Figur 3 zur Herstellung des Halbzeuges gemäß Figur 2.

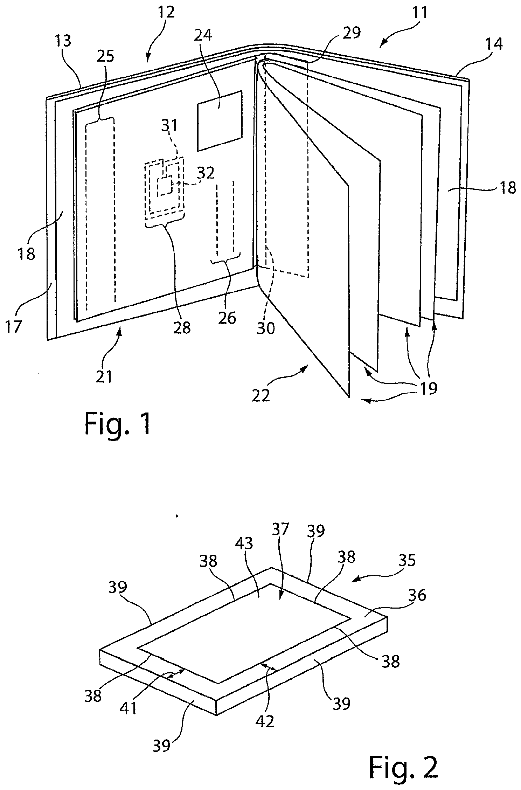

In Figur 1 ist ein buchartiges Dokument 11 dargestellt. Bei diesem buchartigen Dokument 11 handelt es sich beispielsweise um ein Wert- und/oder Sicherheitsdokument, insbesondere um einen Reisepass. Dieses Dokument 11 umfasst einen Bucheinband 12 mit einer Buchdeckenvorderseite 13 und einer Buchdeckenrückseite 14. Diese Buchdeckenvorderseite 13 und die Buchdeckenrückseite 14 umfassen wenigstens eine Buchdeckeneinlage, die an deren Außenseite beispielweise einen Buchdeckeneinband 17 aufweisen können, wobei an der jeweiligen Innenseite der Buchdeckenvorderseite 13 und Buchdeckenrückseite 14 ein Vorsatz 18 aufgebracht sein kann. Bevorzugt sind der Buchdeckeneinband 17 und der Vorsatz 18 durch Verklebung mit der zumindest einen Buchdeckeneinlage verbunden.

Der Bucheinband 12 nimmt mehrere Datenseiten 19 auf. Bevorzugt ist auch ein Datenträger 21, wie beispielsweise eine Personalisierdatenseite, vorgesehen. Die Datenseite 19 und/oder der Datenträger 21 und der Vorsatz 18 sind vorzugsweise zu einem Buchblock 22 miteinander verbunden und in dem Bucheinband 12 befestigt. Beispielsweise können die Datenseiten 19 und/oder der Datenträger 21 und der Vorsatz 18 durch eine Naht zu einem Buchblock 22 miteinander verbunden sein.

Der als Personalisierdatenseite ausgebildete Datenträger 21 ist beispielsweise gemäß ICAO-Standard ausgebildet und umfasst ein Bild 24 des Dokumenteninhabers, einen maschinenlesbaren Bereich 25 (MRZ) sowie weitere Personalisierdaten 26.

Der Datenträger 21 umfasst gemäß diesem Ausführungsbeispiel des Weiteren ein Transpondermodul 28, in welchem die Daten des Dokumenteninhabers und weitere Sicherheitsmerkmale abgespeichert sein können. Der Datenträger 21 ist beispielsweise als Einlegeblatt ausgebildet und kann gemäß dem Ausführungsbeispiel eine Lasche 29 umfassen, die sich über einen Nahtbereich 30 hinaus erstreckt. Alternativ kann anstelle der Lasche 29 eine vollständige Personalisier- oder Datenseite vorgesehen sein.

Der Datenträger 21 umfasst wenigstens zwei Kunststoffschichten, die miteinander laminiert sind und einen Folienverbund bilden. Dazwischenliegend ist das Transpondermodul 28 vorgesehen. Vorzugsweise kann zwischen den zumindest zwei äußeren Kunststoffschichten eine weitere Schicht, insbesondere aus Papier, eingebracht sein, welche die Personalisierdaten 26 sowie das Bild 24 und den maschinenlesbaren Bereich 25 umfasst. Bevorzugt sind die äußeren Kunststoffschichten aus Polycarbonat ausgebildet und umhüllen die innenliegende Schicht bevorzugt vollständig.

Das Transpondermodul 28 umfasst einen IC-Chip 32 sowie eine damit verbundene Antenne 31, welche aus mehreren Windungen besteht und vorzugsweise aufgedruckt sein kann.

In Figur 2 ist ein Halbzeug 35 perspektivisch dargestellt, welches zur Bildung einer Buchdeckenvorderseite 13 und/oder Buchdeckenrückseite 14 eingesetzt wird. Dieses Halbzeug 35 besteht aus einem kartenförmigen Rohling 36, welcher das Format des buchartigen Dokumentes 11 umfasst. Dieser kartenförmige Rohling 36 kann beispielsweise aus Pappe, Papier, Kunststoff und/oder einem Verbundmaterial aus einem der vorgenannten Materialien bestehen und sowohl einlagig als auch mehrlagig ausgebildet sein. Auf einer Seite des kartenförmigen Rohlings 36 ist ein Appliziersegment 37 aufgebracht, welches aus einer Klebstoffschicht 43 besteht. Bei dieser Klebstoffschicht 43 kann es sich beispielsweise um Acrylat, Polyolefin, Vinylacetat oder Vinylacetat-Copolymer oder einem thermoplastischen oder latent reaktiven Polyurethan handeln.

Dieses Appliziersegment 37 weist ein Format auf, welches kleiner als das Format des kartenförmigen Rohlings 36 ist. Jede Seitenkante 38 des Appliziersegmentes 37 ist gegenüber einer Außenkante 39 des kartenförmigen Rohlings 36 nach innen zurückversetzt. Dadurch ist ein freier Randabschnitt 41, 42 am kartenförmigen Rohling 36 gebildet, der frei von dem Appliziersegment 37, also frei von einer Klebstoffschicht 43, ist. Bevorzugt ist der Randabschnitt 41 entlang einer Längsseite des kartenförmigen Rohlings 36 gleich breit wie ein Randabschnitt 41 entlang einer Schmalseite des kartenförmigen Rohlings 36.

Das Appliziersegment 37 ist als eine vollflächige Klebstoffschicht 43 auf dem kartenförmigen Rohling 36 aufgebracht.

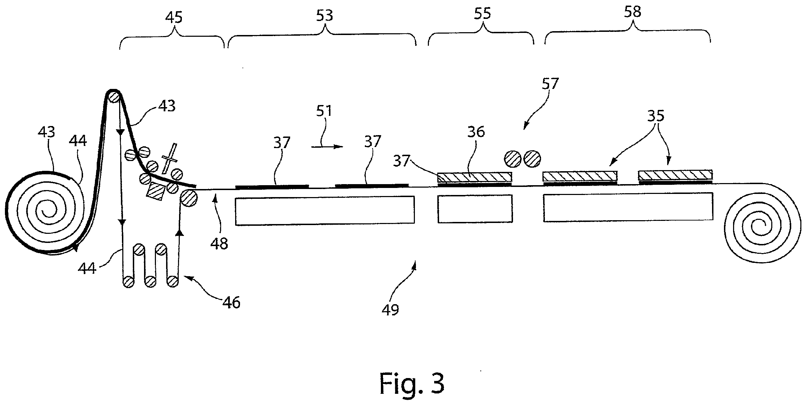

Zur Herstellung eines solchen Halbzeuges 35 ist in Figur 3 schematisch eine erste Ausführungsform für einen Verfahrensablauf dargestellt.

Eine Klebstoffschicht 43 zur nachfolgenden Bildung eines Appliziersegmentes 37 wird als Materialbahn auf einer Trägerfolie 44 bereitgestellt. Vorzugsweise wird die Trägerfolie 44 mit der darauf aufgebrachten Klebstoffschicht 43 als Rollenware beigefügt. Die Trägerfolie 44 mit der darauf aufgebrachten Klebstoffschicht 43 wird einer Schneidstation 45 zugeführt. Vor der Schneidstation 45 wird die Trägerfolie 44 von der Klebstoffschicht 43 abgelöst und einem Pufferspeicher 46 zugeführt. Die Klebstoffschicht 43 wird in der Schneidstation 45 auf ein vorbestimmtes Maß abgelängt bzw. auf ein bestimmtes Maß geschnitten. Dies kann mittels eines Scheren- oder Ambossschnittes, durch ein Kapp- oder ein Rundmesser oder dergleichen erfolgen. Darauffolgend wird das dadurch gebildete Appliziersegment 37 einem Transferband 48 zugeführt, welches in eine Applikationsvorrichtung 49 einläuft. Dieses Transferband 48 ist unmittelbar der Schneidstation 45 zugeordnet und nachgeschalten, so dass die geschnittenen Appliziersegmente 37 auf dem Transferband 48 abgelegt werden können.

Das Ablegen bzw. Aufbringen der Appliziersegmente 37 wird im Verhältnis zur Verfahrgeschwindigkeit des Transferbandes 48 derart angesteuert, dass die Appliziersegmente 37 einen vorbestimmten Abstand zueinander und aufeinanderfolgend auf dem Transferband 48 aufweisen.

Im Ausführungsbeispiel gemäß Figur 3 wird das Transferband 48 durch die Trägerfolie 44 gebildet, welche aus dem Pufferspeicher 46 der Applikationsvorrichtung 49 zugeführt wird.

Der kartenförmige Rohling 36 ist beispielsweise rechteckförmig ausgebildet, wie in Figur 2 dargestellt ist. Dieser wird derart in der Applikationsvorrichtung 49 dem Transferband 48 zugeführt, dass eine Schmalseite des Rohlings 36 quer zur Transportrichtung 51 des Transferbandes 48 ausgerichtet ist. Somit ist die Längsseite des kartenförmigen Rohlings 36 parallel zur Transportrichtung 51 ausgerichtet.

Ausgehend von einer solchen Ausrichtung des Rohlings 36 auf dem Transferband 48 wird auch die Breite der Materialbahn für die Klebstoffschicht 43 ausgewählt. Die Breite der Materialbahn entspricht der Schmalseite des kartenförmigen Rohlings 36 abzüglich der zweifachen Breite des Randabschnittes 42. Durch die Zuführung einer bereits definierten Breite der Materialbahn der Klebstoffschicht 43 wird der freie Randabschnitt 42 zwischen dem Appliziersegment 37 zum kartenförmigen Rohling 36 erzielt.

Der jeweilige Randabschnitt 41 zwischen der Schmalseite des kartenförmigen Rohlings 36 und dem Appliziersegment 37 wird dahingehend bestimmt, dass die Klebstoffschicht 43 mit einer Länge geschnitten wird, welche der Länge des kartenförmigen Rohlings 36 abzüglich des zweifachen Randabschnittes 41 entspricht.

Das Ablegen des geschnittenen Appliziersegmentes 37, welches durch die Schneidstation 45 ausgegeben wird, erfolgt dabei derart auf das Transferband 48, dass zwischen einem vorauseilenden Appliziersegment 37 und einem nachfolgenden Appliziersegment 37 zumindest der zweifache Randabschnitt 41 als Abstand eingehalten ist. Bevorzugt ist dieser Abstand der aufeinanderfolgenden Appliziersegmente 37 größer als der zweifache Randabschnitt 41.

Das Transferband 48 mit dem darauf aufliegenden Appliziersegment 37 durchläuft eine Heizzone 53, durch welche die Klebstoffschicht 43 angewärmt wird. Darauffolgend wird das angewärmte Appliziersegment 37 einer Fügestation 55 zugeführt. In dieser Fügestation 55 wird der kartenförmige Rohling 36 auf das Appliziersegment 37 passergenau aufgebracht, um das Halbzeug 35 zu bilden.

Darauffolgend wird das Halbzeug 35 mittels Andrückwalzen 57 auf das Appliziersegment 37 angedrückt. Nachfolgend durchläuft das Halbzeug 35 eine Kühlzone 58, bevor das Halbzeug 35 am Ende der Applikationsvorrichtung 49 von dem Transferband 48 entfernt oder an eine weitere Bearbeitungsstation übergeben wird.

Im vorliegenden Ausführungsbeispiel wird die als Transferband 48 dienende Trägerfolie 44 am Ende der Applikationsvorrichtung 49 aufgerollt. Diese Trägerfolie 44 ist bevorzugt als ein Silikonpapier oder eine Folie mit einer Silikonbeschichtung ausgebildet, so dass die Klebstoffschicht 43 sich leicht lösen lässt.

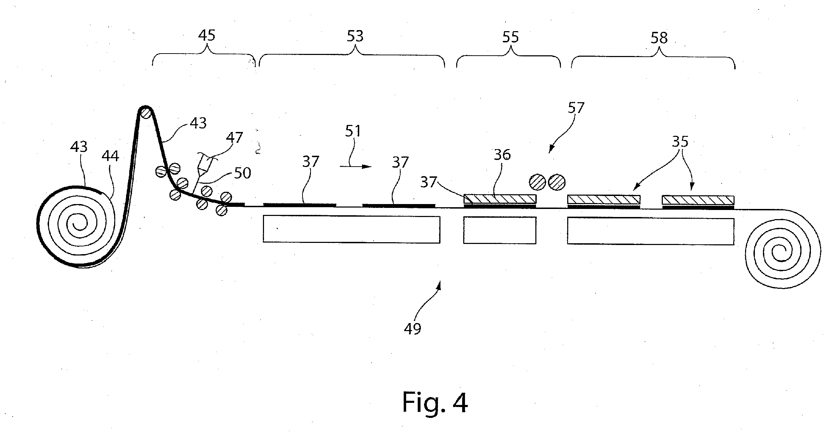

In Figur 4 ist eine alternative Ausführungsform des Verfahrens zu Figur 3 dargestellt. Diese Ausführungsform weicht lediglich in der Ausbildung der Schneidstation 45 ab. Bei dieser Ausführungsform der Schneidstation 45 ist eine Laserbearbeitungseinrichtung vorgesehen, von welcher lediglich ein Laserschneidkopf 47 dargestellt ist. Über diesen Laserschneidkopf 47 wird ein Laserstrahl 50 auf die Klebstoffschicht 43 gerichtet. Durch den Einsatz einer Laserbearbeitungseinrichtung wird mittels des Laserstrahls 50 die Klebemittelschicht 43 verdampft. Dadurch werden die einzelnen Appliziersegmente 37 erzeugt. Beim Verdampfen der Klebemittelschicht 43 mittels des Laserstrahls 50 wird die Trägerfolie 44 nicht durchtrennt.

Diese Ausführungsform weist dadurch den Vorteil auf, dass ein zusätzlicher Pufferspeicher 46 gegenüber der Ausführungsform in Figur 3 entfallen kann. Durch die Dauer der Beaufschlagung der Klebemittelschicht 43 mit dem Laserstrahl 50 kann die Breite der klebemittelfreien Zone zwischen den aufeinander folgenden Appliziersegmente 37 bestimmt werden. Zudem führt der Laserschneidkopf 47 eine oszillierende Bewegung quer zur Längsrichtung der Trägerfolie 44 auf, um die Klebemittelschicht 43 bezüglich deren Breite vollständig zu trennen und einzelne Appliziersegmente 37 auszubilden.

Im Hinblick auf die übrigen Merkmale und Ausführungsformen wird vollumfänglich auf die vorstehende Beschreibung zu Figur 3 Bezug genommen.

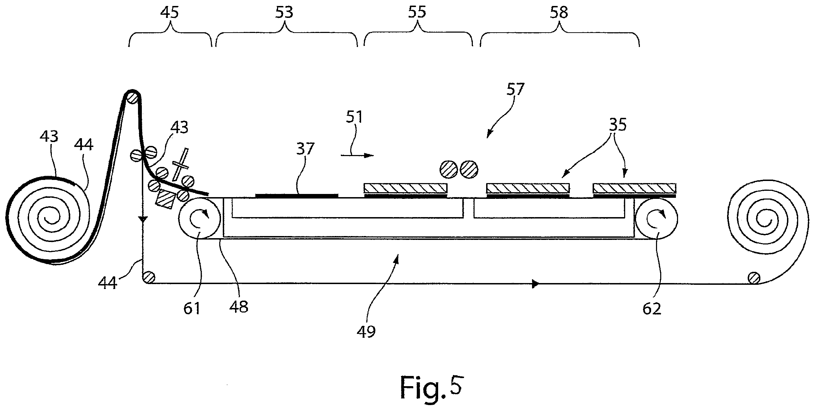

In Figur 5 ist eine alternativ Ausführungsform des Verfahrens zu Figur 3 dargestellt. Diese Ausführungsform weicht dahingehend ab, dass nach dem Abheben der Klebstoffschicht 43 von der Trägerfolie 44 vor der Schneidstation 45 die Trägerfolie 44 auf einer Rolle aufgewickelt wird. Bei dieser Ausführungsform kann somit der Pufferspeicher 46 für die Trägerfolie 44 entfallen. Das durch die Applikationsvorrichtung 49 hindurchführende Transferband 48 ist bevorzugt als ein umlaufendes Endlosband ausgebildet, welches zumindest durch eine einlaufseitige, als auch durch eine auslaufseitig angeordnete Umlenkrolle 61, 62 geführt ist. Die einlaufseitige Umlenkrolle 61 ist unmittelbar der Schneidstation 45 zugeordnet und nimmt die geschnittenen Appliziersegmente 37 auf. Die Ablage der Appliziersegmente 37 auf dem Transferband 48, sowie die vorstehend beschriebenen Schritte und Prozesse in der Applikationsvorrichtung 49 entsprechen der Ausführungsform gemäß Figur 3.

Das Transferband 48 ist bei dieser Ausführungsform beispielsweise als Teflonband oder aus Silikonkautschuk ausgebildet, so dass ein einfaches Ablösen des Appliziersegmentes 37 des Halbzeuges 35 am Ende der Applikationsvorrichtung 49 ermöglicht ist.

Gemäß einer weiteren bevorzugten Ausführungsform der Applikationsvorrichtung 49 kann vorgesehen sein, dass der Heizzone 53 und der Kühlzone 58 eine Vakuumeinrichtung zugeordnet ist, durch welche das Transferband 48 niedergehalten wird. Bevorzugt kann das Transferband 38 Poren aufweisen.

**Bezugszeichenliste**

| | | | |
|---|---|---|---|
| 11. | Buchartiges Dokument | 38. | Seitenkante |
| 12. | Bucheinband | 39. | Außenkante |
| 13. | Buchdeckenvorderseite | 41. | Randabschnitt |
| 14. | Buchdeckenrückseite | 42. | Randabschnitt |
| 17. | Buchdeckeneinband | 43. | Klebstoffschicht |
| 18. | Vorsatz | 44. | Trägerfolie |
| 19. | Datenseite | 45. | Schneidstation |
| 21. | Datenträger (Personalisierdatenseite) | 46. | Pufferspeicher |
| 22. | Buchblock | 47. | Laserschneidkopf |
| 24. | Bild | 48. | Transferband |
| 25. | Maschinenlesbarer Bereich | 49. | Applikationsvorrichtung |
| 26. | Personalisierdaten | 50. | Laserstrahl |
| 28. | Transpondermodul | 51. | Transportrichtung |
| 29. | Lasche | 53. | Heizzone |
| 30. | Nahtbereich | 55. | Fügestation |
| 31. | Antenne | 57. | Andruckmodul |
| 32. | Elektronisches Bauteil/IC-Chip | 58. | Kühlzone |
| 35. | Halbzeug | 61. | Umlenkrolle |
| 36. | kartenförmiger Rohling | 62. | Umlenkrolle |
| 37. | Appliziersegment | | |

## Patentansprüche

1. Verfahren zur Herstellung eines Halbzeuges für ein buchartiges Wert- und/oder Sicherheitsdokument, bei welchem ein kartenförmiger Rohling (36) entlang einer Transportrichtung (51) durch eine Appliziervorrichtung (49) hindurchgeführt wird und bei welchem auf eine Seite des kartenförmigen Rohlings (36) eine Klebstoffschicht (43) aufgebracht und das Halbzeug (35) gebildet wird, **dadurch gekennzeichnet,**
- **dass** die Klebstoffschicht (43) als eine Materialbahn auf einer Trägerfolie (44) bereitgestellt wird, deren Breite kleiner als eine erste Abmessung des kartenförmigen Rohlings (36) quer zur Transportrichtung (51) ist,
- **dass** die als Materialbahn bereitgestellte Klebstoffschicht (43) in einer Schneidstation (45) mit einem Laserstrahl (50) verdampft und in ein Appliziersegment (37) getrennt wird, dessen Länge kürzer als eine zweite Abmessung des kartenförmigen Rohlings (36) längs zur Transportrichtung (51) ist, wobei die Trägerfolie (44) nicht durchtrennt wird, und
- **dass** das Appliziersegment (37) und der kartenförmige Rohling (36) zusammengeführt werden, so dass das Appliziersegment (37) gegenüber allen Außenkanten (39) des kartenförmigen Rohlings (36) nach innen zurückversetzt ist.

2. Verfahren nach Anspruch 1, **dadurch gekennzeichnet, dass** in der Applikationsvorrichtung (49) die Klebstoffschicht (43) in einer Heizzone (53) angewärmt wird.

3. Verfahren nach Anspruch 2, **dadurch gekennzeichnet, dass** in der Applikationsvorrichtung (49) die angewärmte Klebstoffschicht (43) und der kartenförmige Rohling (37) zusammengeführt werden, insbesondere der kartenförmige Rohling (37) auf die angewärmte Klebstoffschicht (43) der kartenförmige Rohling (37) aufgebracht wird und vorzugsweise mittels Andrückrollen (57) angedrückt wird und das Halbzeug (35) gebildet wird.

4. Verfahren nach Anspruch 3, **dadurch gekennzeichnet, dass** das Halbzeug (35) durch eine Kühlzone (58) der Applikationsvorrichtung (49) hindurchgeführt wird.

5. Verfahren nach Anspruch 3, **dadurch gekennzeichnet, dass** während oder nach dem Herausführen des Halbzeuges (35) aus der Applikationsvorrichtung (49) das Halbzeug (35) von dem Transferband (48) abgelöst, vorzugsweise abgezogen wird.

6. Verfahren nach Anspruch 1, **dadurch gekennzeichnet, dass** auf das auf dem kartenförmigen Rohling (36) aufgebrachte Appliziersegment (37) eine vollflächige Klebstoffschicht (43) aufgebracht wird.

7. Verfahren nach Anspruch 1, **dadurch gekennzeichnet, dass** die Klebstoffschicht (43) des Appliziersegmentes (37) aus einem Polymer, insbesondere Acrylat, Polyolefin, Vinylacetat oder Vinylacetat-Copolymer oder einem thermoplastischen oder latent reaktiven Polyurethan besteht.

8. Verfahren nach Anspruch 1, **dadurch gekennzeichnet, dass** die Klebstoffschicht (43) des Appliziersegmentes (37) zumindest fluoreszierende Bestandteile aufweist.

## Claims

1. Method for producing a semi-finished product for a book-like document of value and/or security document, in which a card-shaped blank (36) is guided through an application device (49) in a transportation direction (51) and in which an adhesive layer (43) is applied on a side of the card-shaped blank (36) and the semi-finished product (35) is formed, **characterised in that**
- the adhesive layer (43) is provided as a material web on a carrier film (44), the width of which is smaller than a first dimension of the card-shaped blank (36) transversely to the transportation direction (51),
- the adhesive layer (43) provided as a material web is evaporated in a cutting station (45) using a laser beam (50) and is separated into an application segment (37), the length of which is shorter than a second dimension of the card-shaped blank (36) longitudinally to the transportation direction (51), wherein the carrier film (44) is not cut through, and
- the application segment (37) and the card-shaped blank (36) are merged, such that the application segment (37) is inwardly set back in comparison to all outer edges (39) of the card-shaped blank (36).

2. Method according to claim 1, **characterised in that** the adhesive layer (43) is warmed up in a heating zone (53) in the application device (49).

3. Method according to claim 2, **characterised in that** the warmed adhesive layer (43) and the card-shaped blank (37) are merged in the application device (49), in particular the card-shaped blank (37) is applied to the warmed adhesive layer (43) the card-shaped blank (37) and is pressed on, preferably by means of pressing rollers (57), and the semi-finished product (35) is formed.

4. Method according to claim 3, **characterised in that** the semi-finished product (35) is guided through a cooling zone (58) of the application device (49).

5. Method according to claim 3, **characterised in that**, while or after leading the semi-finished product (35) out of the application device (49), the semi-finished product (35) is detached, preferably pulled off, from the transfer belt (48).

6. Method according to claim 1, **characterised in that** a full-surface adhesive layer (43) is applied to the application segment (37) applied to the card-shaped blank (36).

7. Method according to claim 1, **characterised in that** the adhesive layer (43) of the application segment (37) consists of a polymer, in particular acrylate, polyolefin, vinyl acetate or vinyl acetate copolymer or a thermoplastic or latently reactive polyurethane.

8. Method according to claim 1, **characterised in that** the adhesive layer (43) of the application segment (37) has at least fluorescing components.

## Revendications

1. Procédé de fabrication d'un produit semi-fini pour un document de valeur et/ou de sécurité de type livret, dans le cadre duquel une pièce brute en forme de carte (36) est amenée à traverser un dispositif d'application (49) le long d'un sens de transport (51) et dans le cadre duquel il est appliqué une couche de colle (43) sur une face de la pièce brute en forme de carte (36) et le produit semi-fini (35) est formé, **caractérisé en ce que**
- la couche de colle (43) est présente sous la forme d'une bande de matière, sur une feuille de support (44), dont la largeur est inférieure à une première dimension de la pièce brute en forme de carte (36) transversalement au sens de transport (51),
- la couche de colle (43) présente sous la forme d'une bande de matière est soumise à évaporation dans une station de découpe (45) à l'aide d'un faisceau laser (50) et est séparée en un segment d'application (37) dont la longueur est inférieure à une deuxième dimension de la pièce brute en forme de carte (36) le long du sens de transport (51), ladite feuille de support (44) n'étant pas sectionnée, et
- le segment d'application (37) et la pièce brute en forme de carte (36) sont réunis de manière que le segment d'application (37) est en retrait vers l'intérieur par rapport à tous les bords extérieurs (39) de la pièce brute en forme de carte (36).

2. Procédé selon la revendication 1, **caractérisé en ce que** la couche de colle (43) est chauffée dans une zone de chauffage (53) à l'intérieur du dispositif d'application (49).

3. Procédé selon la revendication 2, **caractérisé en ce que** la couche de colle (43) chauffée et la pièce brute en forme de carte (37) sont réunies dans le dispositif d'application (49), la pièce brute en forme de carte (37) est notamment appliquée sur la couche de colle (43) chauffée la pièce brute en forme de carte (37) et de préférence pressée au moyen de rouleaux de pression (57), et le produit semi-fini (35) est formé.

4. Procédé selon la revendication 3, **caractérisé en ce que** le produit semi-fini (35) est amené à traverser une zone de refroidissement (58) du dispositif d'application (49).

5. Procédé selon la revendication 3, **caractérisé en ce que** le produit semi-fini (35) est détaché de la bande de transfert (48), en étant de préférence pelé, pendant ou après la sortie du produit semi-fini (35) hors du dispositif d'application (49).

6. Procédé selon la revendication 1, **caractérisé en ce qu'**une couche de colle (43) est appliquée sur toute la surface du segment d'application (37) appliqué sur la pièce brute en forme de carte (36).

7. Procédé selon la revendication 1, **caractérisé en ce que** la couche de colle (43) du segment d'application (37) se compose d'un polymère, notamment d'acrylate, de polyoléfine, d'acétate de vinyle ou de copolymère d'acétate de vinyle ou bien de polyuréthane thermoplastique ou à réactivité latente.

8. Procédé selon la revendication 1, **caractérisé en ce que** la couche de colle (43) du segment d'application (37) présente au moins des composants fluorescents.
